# EUROPÄISCHE PATENTANMELDUNG

(11) **EP 4 024 805 A1**
(43) Veröffentlichungstag der Anmeldung: **06.07.2022**
(21) Anmeldenummer: 20217805.9
(22) Anmeldetag: 30.12.2020
(51) Int. Cl.: H04L 29/06, H04L 9/08, G06F 9/455

(54) **VERFAHREN ZUR EINRÄUMUNG EINES ZUGRIFFS FÜR STEUERUNGSANWENDUNGEN AUF KRYPTOGRAPHISCH GESCHÜTZTE SYSTEMRESSOURCEN UND STEUERUNGSSYSTEM**

(71) Anmelder: Siemens Aktiengesellschaft, 80333 München (DE)
(72) Erfinder: Feist, Christian Peter, 80689 München (DE); Knierim, Christian, 81373 München (DE)

(57) **Zusammenfassung**

Zur Einräumung eines Zugriffs für Steuerungsanwendungen auf kryptographisch geschützte Systemressourcen werden mittels zumindest einer Generatorkomponente (600) für Ablaufsteuerungskomponenten jeweils bei einem Start ihrer Ausführung aus Server-spezifischen Charakteristika und aus Ablaufsteuerungskomponenten-spezifischen Charakteristika (601, 602) Credentials (701, 702) zum Zugriff auf die kryptographisch geschützten Systemressourcen erzeugt. Für eine Erzeugung der Credentials sind jeweils in einer Spezifikation (304), die eine Beschreibung der jeweiligen Ablaufsteuerungskomponente und ihrer Abhängigkeiten umfasst, Bedingungen definiert. Nur bei Erfüllung der Bedingungen werden die Credentials erzeugt und/oder bereitgestellt.

## Beschreibung

Die vorliegende Erfindung betrifft ein Verfahren zur Einräumung eines Zugriffs für Steuerungsanwendungen, insbesondere Steuerungsanwendungen innerhalb eines industriellen Automatisierungssystems, auf kryptographisch geschützte Systemressourcen und ein Steuerungssystem, das insbesondere zur Durchführung eines solchen Verfahrens vorgesehen ist.

Industrielle Automatisierungssysteme umfassen üblicherweise eine Vielzahl von über ein industrielles Kommunikationsnetz miteinander vernetzten Automatisierungsgeräten und dienen im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet. Insbesondere können Steuerungsdienste bzw. -anwendungen automatisiert und auslastungsabhängig auf aktuell verfügbare Server oder virtuelle Maschinen eines industriellen Automatisierungssystems verteilt werden.

Aus der älteren internationalen Patentanmeldung mit dem Anmeldeaktenzeichen PCT/EP2020/081253 ist ein Verfahren zur Überwachung von Datenverkehr in einem Kommunikationsnetz bekannt, über das über das Steuerungsanwendungen bereitgestellt werden, für deren Nutzung erste Zugriffsrechte erforderlich sind. Die Steuerungsanwendungen sind jeweils Ablaufsteuerungskomponenten zugeordnet, die in mittels einer Server-Einrichtung gebildete Ablaufsteuerungsumgebung ladbar und dort ausführbar sind. Eine Zugriffssteuerungseinrichtung gibt durch die Ablaufsteuerungskomponenten genutzte Kommunikationsnetz-Schnittstellen zum Zugriff frei und überprüft hierfür zweite Zugriffsrechte zur Nutzung der Kommunikationsnetz-Schnittstellen. Bei einer Anfrage eines Benutzers zur Überwachung von Datenverkehr, der von einer ausgewählten Steuerungsanwendung ausgeht bzw. dort terminiert, fragt die Zugriffssteuerungseinrichtung von einer Überwachungseinrichtung erste Zugriffsrechte des Benutzers zur Nutzung der ausgewählten Steuerungsanwendung ab. In Abhängigkeit der von der Überwachungseinrichtung abgefragten ersten Zugriffsrechte räumt die Zugriffssteuerungseinrichtung zweite Zugriffsrechte zur Nutzung der Kommunikationsnetz-Schnittstellen ein.

In der älteren europäischen Patentanmeldung mit dem Anmeldeaktenzeichen 20198692.4 ist ein Verfahren zur Bereitstellung von zeitkritischen Diensten mittels einer Ablaufsteuerungsumgebung beschrieben, bei dem für jeden Dienst jeweils zumindest eine Server-Komponente vorgesehen ist, die durch eine in die Ablaufsteuerungsumgebung ladbare und dort ausführbare Ablaufsteuerungskomponente gebildet wird. Eine Konfigurationseinheit für zumindest eine Gateway-Komponente eines die Ablaufsteuerungsumgebung umfassenden Teilnetzes ermittelt jeweils zu innerhalb des Teilnetzes gültigen Adressierungsinformationen der Server-Komponenten zugeordnete global gültige Zugangsinformationen. In Abhängigkeit von einem mittels der Konfigurationseinheit vorgegebenen Betriebsmodus werden eine oder mehrere parallel bzw. seriell verbundene Gateway-Komponenten verwendet. Die zumindest eine Gateway-Komponente leitet Dienstzugriffsanfragen entsprechend Weiterleitungs- bzw. Filterregeln, welche die Zugangsinformationen abbilden, und dem Betriebsmodus an die Server-Komponenten weiter.

Durch eine zunehmende Vernetzung zwischen Komponenten eines industriellen Automatisierungssystems ergibt sich einerseits ein erhöhtes Risiko durch cyberkriminelle Angriffe. Andererseits werden Modularität und Flexibilität auch bei industriellen Steuerungsanwendungen immer wichtiger. Insbesondere Containervirtualisierung oder vergleichbarer Virtualisierungskonzepte haben daher in diesem Umfeld stark an Bedeutung gewonnen. Häufig benötigen Container-Instanzen zur Laufzeit Credentials, insbesondere Passwörter oder private Schlüssel, um sich gegenüber anderen Anwendungen, Diensten oder Containern zu authentisieren. Außerdem werden Credentials benötigt, wenn eine Integrität bzw. Vertraulichkeit von Daten sichergestellt werden soll, die Steuerungsanwendungen zugeordnet sind. Bisher werden Credentials oft direkt als Bestandteil in Container-Images oder Docker-Compose-Dateien integriert, so dass zumindest die Vertraulichkeit dieser Credentials nicht mehr gegeben ist.

Android-Apps können beispielsweise eine Keystore-Funktionalität (https://developer.android.com/training/articles/ keystore) nutzen. Mit Hilfe eines Keystores kann eine Android-App kryptographische Schlüssel auf einem Gerät so abspeichern, dass andere Android-Apps keinen Zugriff auf diese Schlüssel haben, die Schlüssel nur unter bestimmten Bedingungen verwendet werden können bzw. zur Verwendung der Schlüssel eine Benutzer-Zustimmung erforderlich ist. Insbesondere sind die Schlüssel im Keystore nie direkt durch die Android-Apps zugreifbar, sondern können nur durch einen vertrauenswürdigen Prozess für kryptographische Operationen genutzt werden.

Docker Swarm Dienste umfassen als Funktionalität Docker Secrets (https://docs.docker.com/engine/swarm/secrets/), die ein zentrales Credential Management für Container ermöglicht. Credentials werden dabei durch einen oder mehrere Swarm Manager verschlüsselt abgespeichert und einem autorisierten Container bei dessen Start in einem vorgegebenen Verzeichnis bereitgestellt. Bei ihrer Erzeugung kann Credentials ein Dienst-Name zugeordnet werden, der beispielsweise in einer Docker-Compose-Datei referenziert werden kann. Ein ähnliches Verfahren zur Erzeugung und Bereitstellung von Credentials ist auch für Kubernetes realisiert (https://kubernetes.io/ docs/tasks/inject-data-application/distribute-credentialssecure/) .

Insgesamt sind bestehende Credential-Management-Lösungen für Container sind einerseits komplex zu konfigurieren und erfordern andererseits eine aufwändige Anwendungsintegration und üblicherweise eine bestehende Netzwerkverbindung zwischen Anwendung und Credential-Management-Dienst sowie ggf. Orchestrierungssystem. Letztgenannter Aspekt kann somit zu Verfügbarkeitsproblemen führen.

Der vorliegenden Erfindung liegt die Aufgabe zugrunde, ein flexibles, aufwandsarm realisierbares Verfahren zur sicheren Einräumung von Zugriffsberechtigungen für Steuerungsanwendungen schaffen, die mittels Containervirtualisierung oder vergleichbarer Virtualisierungskonzepte bereitgestellt werden, sowie eine geeignete Vorrichtung zur Durchführung des Verfahrens anzugeben.

Diese Aufgabe wird erfindungsgemäß durch ein Verfahren mit den in Patentanspruch 1 angegebenen Merkmalen und durch ein System mit den in Patentanspruch 15 angegebenen Merkmalen gelöst. Vorteilhafte Weiterbildungen der vorliegenden Erfindung sind in den abhängigen Patentansprüchen angegeben.

Entsprechend dem erfindungsgemäßen Verfahren zur Einräumung eines Zugriffs für Steuerungsanwendungen auf kryptographisch geschützte Systemressourcen werden die Steuerungsanwendungen durch zumindest eine Server-Einrichtung jeweils mittels Ablaufsteuerungskomponenten bereitgestellt, die in eine mittels der Server-Einrichtung gebildete Ablaufsteuerungsumgebung ladbar und dort ausführbar sind.

Vorzugsweise sind bzw. umfassen die Ablaufsteuerungskomponenten Software-Container, die jeweils von anderen Software-Containern oder Container-Gruppen isoliert innerhalb der Ablaufsteuerungsumgebung ablaufen. Dabei ist die Ablaufsteuerungsumgebung auf einem Host-Betriebssystem der Server-Einrichtung installiert. Vorteilhafterweise nutzen die Software-Container jeweils gemeinsam mit anderen auf der Server-Einrichtung ablaufenden Software-Containern einen Kernel des Host-Betriebssystems der Server-Einrichtung nutzen. Container-Images für die Software-Container können beispielsweise aus einem durch eine Vielzahl von Nutzern lesend bzw. schreibend zugreifbaren Speicher- und Bereitstellungssystem abgerufen werden.

Für die Ablaufsteuerungskomponenten werden erfindungsgemäß mittels zumindest einer Generatorkomponente jeweils bei einem Start ihrer Ausführung aus Server-spezifischen Charakteristika und aus Ablaufsteuerungskomponenten-spezifischen Charakteristika Credentials zum Zugriff auf die kryptographisch geschützten Systemressourcen erzeugt. Diese Charakteristika umfassen insbesondere eine Geräte-spezifische bzw. Software-Container-spezifische Beschreibung oder die jeweilige Server-Einrichtung bzw. Ablaufsteuerungskomponente kennzeichnende Metadaten.

Erfindungsgemäß sind Bedingungen für eine Erzeugung der Credentials jeweils in einer Spezifikation, die eine Beschreibung der jeweiligen Ablaufsteuerungskomponente und ihrer Abhängigkeiten umfasst, definiert. Dementsprechend werden die Credentials nur bei Erfüllung der Bedingungen erzeugt bzw. bereitgestellt. Die Spezifikation für eine Ablaufsteuerungskomponente kann beispielsweise eine Docker-Compose-Datei oder eine Kubernetes-Deployment-Information umfassen. In einer solchen Spezifikation können die Credentials definiert werden, die Steuerungsanwendungen oder Steuerungsanwendungen zugeordnete Ablaufsteuerungskomponenten jeweils benötigen. Derartige Informationen können beispielsweise als Bestandteil eines Container-Images definiert werden, insbesondere mittels Annotations in einem Docker-Image-Manifest
Die Credentials werden erfindungsgemäß nach erfolgreicher Erzeugung bzw. Bereitstellung zur Authentisierung der jeweiligen Ablaufsteuerungskomponente gegenüber durch die Ablaufsteuerungskomponente genutzten Diensten bzw. zur Verschlüsselung von durch die jeweilige Ablaufsteuerungskomponente verwalteten Daten verwendet. Somit kann eine sicherere Verwaltung von Credentials für Ablaufsteuerungskomponenten ermöglicht und insbesondere ein direktes Codieren der Credentials in Dockerfiles oder Docker-Compose-Dateien vermieden werden. Außerdem können unterschiedliche Credentials während einer Entwicklungsphase einerseits und eines Produktivbetriebs andererseits verwendet werden. Auch eine detailgenaue Festlegung von Eigenschaften verwendeter Geheimnisse ist möglich, beispielsweise welchen Ablaufsteuerungskomponenten Geheimnisse bereitgestellt werden dürfen, oder wann Geheimnisse erneuert werden müssen.

Insbesondere für Edge-Computing- oder IoT-Systeme erfordert die vorliegende Erfindung keine Verbindungen zu Passwort-Management-Systemen. Daher ist eine Implementierung des erfindungsgemäßen Verfahrens für Fälle, in denen Credentials nur auf einem oder ausgewählten Geräten benötigt werden, einfach zu administrieren, kostengünstig zu betreiben und wenig fehleranfällig, da keine Abhängigkeiten zu zusätzlichen Remote-Komponenten bestehen. Dabei können gleiche Steuerungsanwendungen auf unterschiedlichen Geräten unterschiedliche Credentials verwenden.

Entsprechend einer besonders bevorzugten Ausführungsform der vorliegenden Erfindung ist die Ablaufsteuerungsumgebung eine vertrauenswürdige Container-Runtime, Dabei werden Software-Container durch die vertrauenswürdige Container-Runtime jeweils auf Basis eines Container-Images gestartet. Vorteilhafterweise werden mittels der Ablaufsteuerungskomponenten Dienste bzw. Funktionen eines industriellen Automatisierungssystems bereitgestellt. Dabei können die Dienste bzw. Funktionen jeweils mehrere gleichartige oder identische Server-Komponenten umfassen, die jeweils durch unterschiedliche Server-Einrichtungen bereitgestellt werden.

Darüber hinaus können die Ablaufsteuerungskomponenten jeweils von der Server-Einrichtung auf eine andere Server-Einrichtung zur dortigen Ausführung migriert bzw. auf anderen Server-Einrichtungen zeitgleich ausgeführt werden. Entsprechend einer weiteren vorteilhaften Ausgestaltung der vorliegenden Erfindung erfasst eine mehreren Server-Einrichtungen zugeordnete Orchestrierungskomponente ein Anlegen, ein Löschen bzw. eine Änderung der Ablaufsteuerungskomponenten und registriert mittels der Ablaufsteuerungskomponenten bereitgestellte Dienste mit ihrem jeweiligen Ausführungsstatus. Dabei umfasst das Anlegen, das Löschen bzw. die Änderung der Ablaufsteuerungskomponenten jeweils ein Allokieren oder Freigeben von Ressourcen in der jeweiligen Server-Einrichtung. Somit kann die vorliegende Erfindung auch vorteilhaft mit Pod- oder Container-Orchestrierungslösungen verwendet werden.

Die Credentials umfassen insbesondere kryptographische Schlüssel bzw. Nutzernamen und Passwörter und können durch die Server-Einrichtung oder durch eine der Server-Einrichtung zugeordnete Orchestrierungskomponente in einem der jeweiligen Ablaufsteuerungskomponente zugeordneten Speicherbereich oder -objekt gespeichert werden. Vorteilhafterweise werden die Credentials in einem der jeweiligen Ablaufsteuerungskomponente zugeordneten virtuellen Laufwerk oder Verzeichnis auf der Server-Einrichtung oder Orchestrierungskomponente gespeichert. Beispielsweise können die Credentials über eine Datei, die einer Container-Instanz zugeordnet ist, in einem tmpfs-Dateisystem, über Umgebungsvariable oder über ein persistentes logisches oder physikalisches Laufwerk, das einer oder mehreren Container-Instanzen zugeordnet ist, bereitgestellt werden.

Entsprechend einer weiteren Ausgestaltung der vorliegenden Erfindung wird das virtuelle Laufwerk oder Verzeichnis, in dem die Credentials gespeichert werden, durch einen reservierten Arbeitsspeicherbereich der Server-Einrichtung oder Orchestrierungskomponente gebildet. Dabei ist der Arbeitsspeicherbereich von einem physikalischen Arbeitsspeicher bzw. von einer Auslagerungsdatei oder -partition umfasst. Vorzugsweise werden die Credentials mit einem zusätzlichen kryptographischen Schlüssel geschützt, der nur der Server-Einrichtung bekannt ist. Darüber hinaus werden die Credentials vorteilhafterweise zyklisch durch eine Ablaufsteuerungskomponente, die einer Initialisierungsanwendung zugeordnet ist, oder durch die Generatorkomponente erneuert.

Das erfindungsgemäße Steuerungssystem ist insbesondere zur Durchführung eines Verfahrens entsprechend vorangehenden Ausführungen vorgesehen und umfasst zumindest eine Ablaufsteuerungskomponente, die in eine mittels einer Server-Einrichtung gebildete Ablaufsteuerungsumgebung ladbar und dort ausführbar ist. Außerdem weist das Steuerungssystem eine Generatorkomponente auf, die dafür ausgestaltet und eingerichtet ist, für die Ablaufsteuerungskomponente bei einem Start ihrer Ausführung aus Server-spezifischen Charakteristika und aus Ablaufsteuerungskomponenten-spezifischen Charakteristika Credentials zum Zugriff auf kryptographisch geschützte Systemressourcen zu erzeugen. Dabei sind die Bedingungen für eine Erzeugung der Credentials jeweils in einer Spezifikation definiert, die eine Beschreibung der jeweiligen Ablaufsteuerungskomponente und ihrer Abhängigkeiten umfasst.

Darüber hinaus ist die Generatorkomponente erfindungsgemäß dafür ausgestaltet und eingerichtet, die Credentials nur bei Erfüllung der Bedingungen zu erzeugen bzw. bereitzustellen. Dementsprechend ist die Ablaufsteuerungskomponente dafür ausgestaltet und eingerichtet, die Credentials nach erfolgreicher Erzeugung bzw. Bereitstellung zur Authentisierung der jeweiligen Ablaufsteuerungskomponente gegenüber durch die Ablaufsteuerungskomponente genutzten Diensten bzw. zur Verschlüsselung von durch die jeweilige Ablaufsteuerungskomponente verwalteten Daten zu verwenden.

Die vorliegende Erfindung wird nachfolgend an einem Ausführungsbeispiel anhand der Zeichnung näher erläutert. Es zeigt die
- Figur 1: eine Anordnung mit einer Server-Einrichtung zur Bereitstellung von Diensten bzw. Steuerungs- und Überwachungsanwendungen eines industriellen Automatisierungssystems,
- Figur 2: eine Erzeugung von Credentials für die mittels der Server-Einrichtung gemäß Figur bereitgestellten Dienste bzw. Steuerungs- und Überwachungsanwendungen.

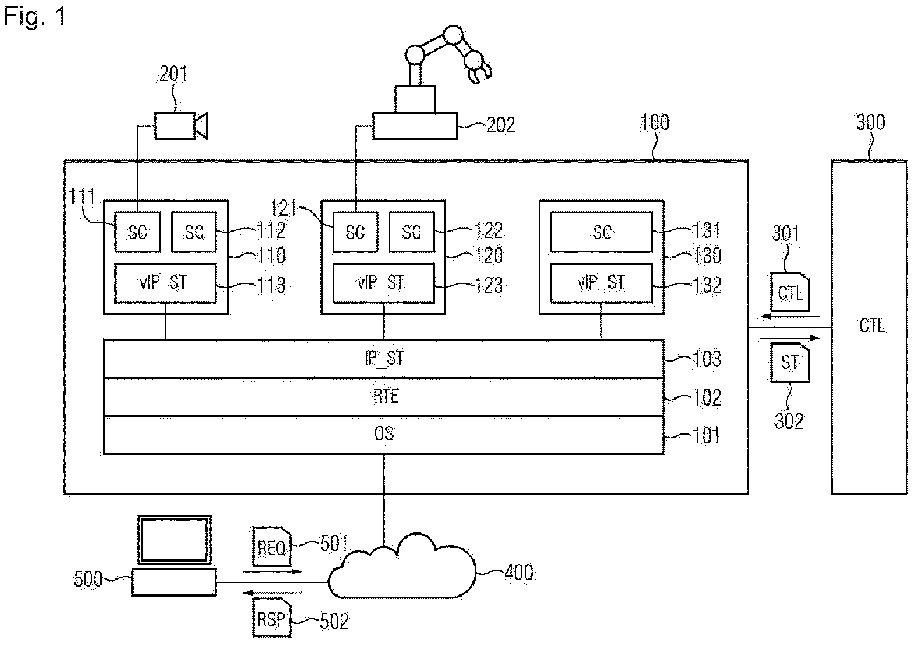

Die in Figur 1 dargestellte Anordnung umfasst eine Server-Einrichtung 100 mit mehreren virtuellen Hosts 110, 120, 130 zur Bereitstellung von Diensten bzw. Steuerungs- und Überwachungsanwendungen eines industriellen Automatisierungssystems. Die Dienste bzw. Steuerungs- und Überwachungsanwendungen des industriellen Automatisierungssystems sind exemplarisch für zeitkritische Dienste. Die Dienste bzw. Steuerungs- und Überwachungsanwendungen können beispielsweise auf Grundlage von OPC UA bereitgestellt werden. Somit umfassen die Dienste bzw. Steuerungs- und Überwachungsanwendungen Schnittstellendefinitionen, die für einen dauerhaften Zugriff auf die Dienste bzw. Steuerungs- und Überwachungsanwendungen genutzt werden können.

Die Dienste können jeweils mehrere gleichartige oder identische Steuerungs- und Überwachungsanwendungen umfassen, die jeweils durch unterschiedliche Server-Einrichtungen bzw. virtuelle Hosts bereitgestellt werden. Eine Bereitstellung mehrerer gleichartiger Steuerungs- und Überwachungsanwendungen auf unterschiedlichen Server-Einrichtungen bzw. mittels unterschiedlicher virtueller Hosts gleichzeitig kann beispielsweise mittels Kubernetes-Daemon Sets durch eine Orchestrierungskomponente 300 gesteuert werden, die den Server-Einrichtungen bzw. virtuellen Hosts administrativ zugeordnet ist.

Außerdem umfasst die in Figur 1 dargestellte Anordnung zumindest ein Endgerät 500, das zumindest einem Benutzer zugeordnet ist, der im vorliegenden Ausführungsbeispiel Anfragen 501 zur Nutzung der Dienste über ein Kommunikationsnetz 400 an die Server-Einrichtung 100 sendet und von dieser dementsprechend Antworten 502 bzw. Messwerte und Statusmeldungen empfängt. Das Kommunikationsnetz 400 ist vorzugsweise als Time-Sensitive Network ausgestaltet, insbesondere entsprechend IEEE 802.1Q, IEEE 802.1AB, IEEE 802.1AS, IEEE 802.1BA bzw. IEEE 802.1CB.

Die virtuellen Hosts 110, 120, 130 implementieren vorzugsweise Funktionen von Steuerungsgeräten eines industriellen Automatisierungssystems, wie speicherprogrammierbaren Steuerungen, oder von Feldgeräten, wie Sensoren oder Aktoren. Im vorliegenden Ausführungsbeispiel dienen die virtuellen Hosts 110, 120 einem Austausch von Steuerungs- und Messgrößen mit durch die Server-Einrichtung 100 bzw. die virtuellen Hosts 110, 120 gesteuerten Maschinen oder Vorrichtungen 201-202. Insbesondere sind die virtuellen Hosts 110, 120 für eine Ermittlung geeigneter Steuerungsgrößen aus erfassten Messgrößen vorgesehen.

Das Endgerät 500 ist im vorliegenden Ausführungsbeispiel eine Bedien- und Beobachtungsstation und dient zur Visualisierung von Prozessdaten bzw. Mess- und Steuerungsgrößen, die durch die Server-Einrichtung 100 bzw. die virtuellen Hosts 110, 120 oder andere Automatisierungsgeräte verarbeitet bzw. erfasst werden. Insbesondere wird das Endgerät 500 zur Anzeige von Werten eines Regelungskreises und zur Veränderung von Regelungsparametern oder -programmen verwendet.

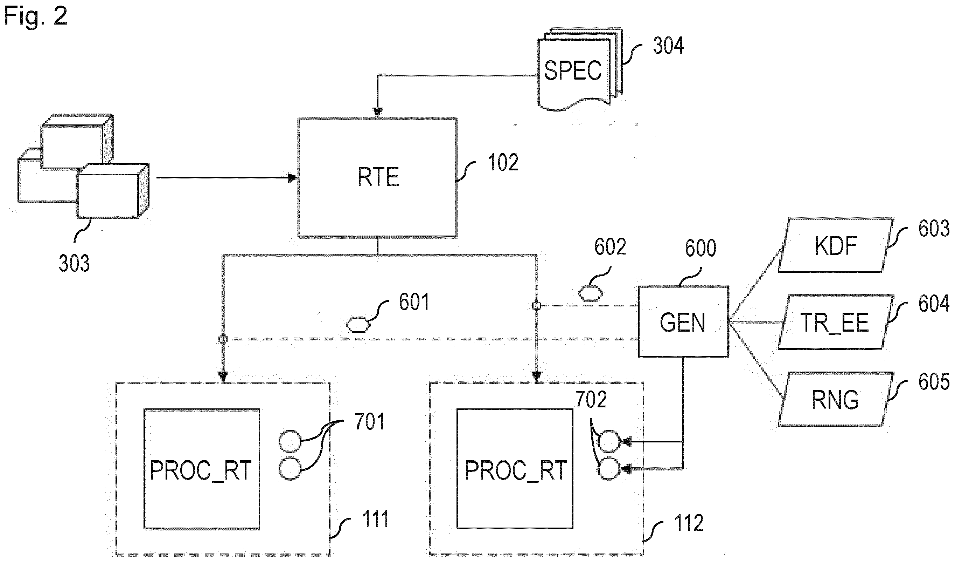

Den Diensten ist jeweils zumindest ein Container 111-112, 121-122, 131 zugeordnet, der in eine vertrauenswürdige Container-Runtime 102 ladbar und dort ausführbar ist. Der Container-Runtime 102 ist eine Funktionseinheit 103 zur Verarbeitung eines Kommunikationsprotokollstapels zugeordnet. Dementsprechend wird für die Container 111-112, 121-122, 131 jeweils eine Funktionseinheit 113, 123, 132 zur Verarbeitung eines Kommunikationsprotokollstapels verfügbar gemacht, die mit der Funktionseinheit 103 gekoppelt ist. Insbesondere umfassen die den Containern 111-112, 121-122, 131 zugeordneten Funktionseinheiten 113, 123, 132 jeweils einen virtuellen IP-Stack, der mit einem von der Funktionseinheit 103 umfassten IP-Stack verbunden ist. Die Container werden durch die Container-Runtime 102 jeweils auf Basis eines Speicherabbilds bzw. Container-Images 303 gestartet (siehe auch Figur 2). Die Container-Images 303 sind beispielsweise aus einem durch eine Vielzahl von Nutzern lesend bzw. schreibend zugreifbaren Speicher- und Bereitstellungssystem abrufbar.

Die Container-Runtime 102 wird mittels der Server-Einrichtung 100 bereitgestellt und ist dort auf als Anwendung auf einem Host-Betriebssystem 101 der Server-Einrichtung 100 installiert. Darüber hinaus können Container jeweils von der Server-Einrichtung 100 auf eine andere Server-Einrichtung zur dortigen Ausführung migriert bzw. auf anderen Server-Einrichtungen zeitgleich ausgeführt werden. Im vorliegenden Ausführungsbeispiel laufen die Container jeweils von anderen Containern, Container-Gruppen bzw. Kubernetes-Pods isoliert in der Container-Runtime 102 ab. Dabei nutzen die Container jeweils gemeinsam mit anderen auf der Server-Einrichtung 100 ablaufenden Containern einen Kernel des Host-Betriebssystems 101 der Server-Einrichtung 100.

Eine Isolation der Container bzw. eine Isolation von ausgewählten Betriebssystemmitteln untereinander kann insbesondere mittels Control Groups und Namespacing realisiert werden.

Mittels Control Groups lassen sich Prozessgruppen definieren, um verfügbare Ressourcen für ausgewählte Gruppen zu beschränken. Über Namespaces können einzelne Prozesse oder Control Groups gegenüber anderen Prozessen oder Control Groups isoliert bzw. verborgen werden.

Die Orchestrierungskomponente 300 erfasst mittels entsprechender Überwachungsaufträge 301 ein Anlegen, ein Löschen bzw. eine Änderung der Container bzw. von die Container umfassenden Pods und registriert mittels der Container bereitgestellte Dienste mit ihrem jeweils zurückgemeldeten Ausführungsstatus 302. Das Anlegen, das Löschen bzw. die Änderung der Container umfasst jeweils ein Allokieren oder Freigeben von Ressourcen in der jeweiligen Server-Einrichtung. Die Orchestrierungskomponente kann beispielsweise 300 als Kubernetes-API-Server ausgestaltet sein.

Zur Einräumung eines Zugriffs auf kryptographisch geschützte Systemressourcen für die Steuerungs- und Überwachungsanwendungen, die durch die Server-Einrichtung 100 mittels der Container 111, 112 bereitgestellt werden, ist entsprechend Figur 2 eine Generatorkomponente 600 vorgesehen. Mittels der Generatorkomponente 600 werden für die Container 111, 112 jeweils bei einem Start ihrer Ausführung aus Server-spezifischen Charakteristika und aus Ablaufsteuerungskomponenten-spezifischen Charakteristika 601, 602 Credentials 701, 702 zum Zugriff auf die kryptographisch geschützten Systemressourcen erzeugt. Dabei sind jeweils in einer Spezifikation 304, die eine Beschreibung von mittels der Container 111, 112 bereitgestellter Steuerungs- und Überwachungsanwendungen bzw. Apps und ihrer Abhängigkeiten umfasst, Bedingungen für eine Erzeugung der Credentials 701, 702 definiert. Die Credentials 701, 702 werden nur bei Erfüllung dieser Bedingungen erzeugt bzw. bereitgestellt.

Eine Steuerungs- und Überwachungsanwendung bzw. App kann eine oder mehrere Container-Instanzen umfassen, beispielsweise einen Web-Frontend-Container und einen Datenbank-Container. Die Spezifikation 304 zur Beschreibung einer App und ihrer Abhängigkeiten kann insbesondere auf einer Docker-Compose-Datei basieren oder von einer Kubernetes-Deployment-Information umfasst sein. Vorzugsweise werden in der Spezifikation Geheimnisse definiert, die eine App bzw. einzelne Container der App benötigen.

Nach erfolgreicher Erzeugung bzw. Bereitstellung werden die Credentials 701, 702 zur Authentisierung des jeweiligen Containers 111, 112 gegenüber durch den Container 111, 112 genutzten Diensten, beispielsweise eine durch einen anderen Container bereitgestellte Datenbank-Anwendung, bzw. zur Verschlüsselung von durch den jeweiligen Container 111, 112 verwalteten Daten verwendet. Die Credentials 701, 702 umfassen insbesondere kryptographische Schlüssel und/oder Nutzernamen plus Passwörter und können durch die Server-Einrichtung 100 oder Orchestrierungskomponente 300 in einem dem jeweiligen Container 111, 112 zugeordneten Speicherbereich oder -objekt gespeichert werden.

Beispielsweise können die Credentials in einem dem jeweiligen Container 111, 112 zugeordneten virtuellen Laufwerk oder Verzeichnis auf der Server-Einrichtung 100 oder auf der Orchestrierungskomponente 300 gespeichert werden. Ein solches virtuelles Laufwerk oder Verzeichnis kann wiederum durch einen reservierten Arbeitsspeicherbereich der Server-Einrichtung 100 oder der Orchestrierungskomponente 300 gebildet werden, wobei dieser Arbeitsspeicherbereich von einem physikalischen Arbeitsspeicher bzw. von einer Auslagerungsdatei oder -partition umfasst ist. Zusätzlich können die Credentials 701, 702 mit einem zusätzlichen kryptographischen Schlüssel geschützt werden, der nur der Server-Einrichtung 100 bekannt ist.

Eine Definition von Credentials bzw. Geheimnissen kann folgende Aspekte umfassen:
- Name und Komplexität eines Geheimnisses, beispielsweise Anzahl von Zeichen bei einem Passwort,
- Art der Bereitstellung des Geheimnisses in einer Container-Instanz, beispielsweise als Datei in einem tmpfs-Dateisystem, als Umgebungsvariable oder über ein persistentes logisches oder physikalisches Laufwerk,
- Gültigkeitsdauer, beispielsweise für eine bestimmte Zeitdauer, temporär oder für eine vorgegebene Anzahl an Startvorgängen,
- zu erfüllende Ableitungseigenschaften, insbesondere in Bezug auf Server-spezifische Charakteristika, beispielsweise Ableitung von einem in Geräte-Hardware gespeicherten Geräte-Geheimnis 603, Erzeugung in einer geschützten Softwareumgebung 604 (Trusted Execution Environment) oder Erzeugung mit Hilfe eines Hardware-Zufallszahlengenerators 605,
- Gültigkeitsbereich, beispielsweise gerätespezifisch, Plattform-, Versions-, oder App-Hersteller-spezifisch oder zufällig.

Grundsätzlich ist auch nur ein Referenzieren für einen bestimmten Container möglich, insbesondere über den Namen des Geheimnisses, wenn dieses an einer anderen Stelle definiert ist. Darüber hinaus kann das Erzeugen eines Geheimnisses durch Ableiten von einem weiteren Geheimnis erfolgen, beispielsweise aus einem in einem Hardware-basierten Speicher abgelegten Geräteschlüssel. Vorzugsweise erfolgt eine solche Ableitung mit Hilfe einer Schlüsselableitungsfunktion (Key Derivation Function). Dabei können weitere Parameter, wie etwa App- oder Container-Name, Image-Name, Hersteller-Name und/oder Image-Signatur, als Teil der Ableitung verwendet werden. So können gerätespezifische Geheimnisse erzeugt werden, die zusätzlich von Eigenschaften der jeweiligen App oder Container-Instanz abhängig sind. Auf diese Weise können auf einem Gerät, insbesondere auf der Server-Einrichtung 100, immer die gleichen Geheimnisse für eine bestimmte App oder App-Version oder einen ausgewählten App-Hersteller erzeugt werden. Hängt ein Geheimnis beispielsweise zumindest teilweise von der App-Version ab, kann vorgesehen werden, dass bei Aktualisierung der jeweiligen App automatisch neue Geheimnisse für diese App erzeugt werden.

Das Erzeugen bzw. Bereitstellen der Credentials 701, 702 bzw. Geheimnisse kann zudem in Abhängigkeit weiterer Kriterien erfolgen. Beispielsweise wird ein bestimmtes Geheimnis mehreren Containern nur dann bereitgestellt, wenn diese zur selben App gehören oder die Container-Images von derselben vertrauenswürdigen Quelle stammen. Entsprechend einem weiteren Beispiel erfolgt das Erzeugen oder Bereitstellen nur unter der Bedingung, dass ein vorgegebener Hardware-basierter Trust-Anchor mit einer ausgewählten Firmware-Version verfügbar ist. Diese Bedingungen können in der Spezifikation 304 oder in einer globalen Spezifikation für mehrere Geräte definiert werden. Insbesondere können Bedingungen in einer solchen globalen Spezifikation mit einer höheren oder niedrigeren Priorität als Container- bzw. App-spezifische Bedingungen behandelt werden.

Das Erzeugen bzw. Bereitstellen von Geheimnissen durch eine vertrauenswürdige Instanz auf einem Gerät, insbesondere auf der Server-Einrichtung 100, kann beispielsweise mittels eines OCI-Hook (https://www.mankier.com/5/oci-hooks) durchgeführt werden. Ein solcher OCI-Hook kann vor einem Start eines Containers ausgeführt werden, insbesondere für ausgewählte Container. Grundsätzlich kann hierfür auch ein Daemon-Prozess verwendet werden, der als Teil eines Startvorgangs von Container Anfragen für das Erzeugen und Bereitstellen von Geheimnissen bearbeitet. Entsprechend einer weiteren Ausführungsvariante können von Orchestrierungslösungen bekannte Init-Container verwendet werden, die vor Start einer App bzw. deren zugeordneter Container ausgeführt werden und beispielsweise privilegiertere Operationen umsetzen, die als Teil eines Startvorgangs ausgeführt werden sollen, (siehe **Fehler! Linkreferenz ungültig.**). Ein Init-Container kann das Erzeugen und Bereitstellen der Credentials 701, 702 bzw. Geheimnisse übernehmen.

Vorteilhafterweise werden die Credentials 701, 702 zur Laufzeit der Container 111, 112 zyklisch erneuert, beispielsweise durch einen dedizierten Daemon-Prozess oder durch einen weiteren Container. Insbesondere bei Steuerungs- und Überwachungsanwendungen bzw. Apps mit langem Lebenszyklus, der für industrielle Steuerungs- und Überwachungsanwendungen typisch ist, kann damit verhindert werden, dass kompromittierte Geheimnisse über einen längeren Zeitraum verwendet werden.

Darüber hinaus können Passwörter, die zu einem festen Datum ablaufen, durch einen jeweils berechtigten Container nach Ablauf neu angefordert werden. In diesem Fall wird eine Passworterzeugung vorteilhafterweise nicht durchgängig allein durch einen Init-Container durchgeführt, sondern vorzugsweise mittels eines Daemon-Prozesses oder eines Kubernetes-Cronjobs, um den Init-Container zu festen Zeitpunkten als eigenständige Instanz periodisch zu starten und eine zyklische Erneuerung sicherzustellen. Bei einer zyklischen Erneuerung von Credentials ist zu berücksichtigen, dass sämtliche involvierten Instanzen über die Erneuerung der Credentials informiert werden. Durch Nutzung eines Kubernetes-Cronjob ist dies einfach realisierbar, da ein periodisch gestarteter Init-Container anhand von Deployment-Informationen relevante Container-Instanzen informieren kann. Zur Informierung involvierter bzw. zu involvierender Instanzen über erneuerte Credentials kann in lokalen Endgeräten ohne Verwendung von Orchestrierungslösungen zumindest auf lokale Deployment-Informationen, wie Docker-Compose-Dateien, verwendet werden.

## Patentansprüche

1. Verfahren zur Einräumung eines Zugriffs für Steuerungsanwendungen auf kryptographisch geschützte Systemressourcen, bei dem
- die Steuerungsanwendungen durch zumindest eine Server-Einrichtung (100) jeweils mittels Ablaufsteuerungskomponenten (111, 112) bereitgestellt werden, die in eine mittels der Server-Einrichtung gebildete Ablaufsteuerungsumgebung (102) ladbar und dort ausführbar sind,
- für die Ablaufsteuerungskomponenten mittels zumindest einer Generatorkomponente (600) jeweils bei einem Start ihrer Ausführung aus Server-spezifischen Charakteristika und aus Ablaufsteuerungskomponenten-spezifischen Charakteristika (601, 602) Credentials (701, 702) zum Zugriff auf die kryptographisch geschützten Systemressourcen erzeugt werden,
- wobei Bedingungen für eine Erzeugung der Credentials jeweils in einer Spezifikation (304), die eine Beschreibung der jeweiligen Ablaufsteuerungskomponente und ihrer Abhängigkeiten umfasst, definiert sind und die Credentials nur bei Erfüllung der Bedingungen erzeugt und/oder bereitgestellt werden,
- die Credentials nach erfolgreicher Erzeugung und/oder Bereitstellung zur Authentisierung der jeweiligen Ablaufsteuerungskomponente gegenüber durch die Ablaufsteuerungskomponente genutzten Diensten und/oder zur Verschlüsselung von durch die jeweilige Ablaufsteuerungskomponente verwalteten Daten verwendet werden.

2. Verfahren nach Anspruch 1,
bei dem die Ablaufsteuerungskomponenten Software-Container sind oder umfassen, die jeweils von anderen Software-Containern oder Container-Gruppen isoliert innerhalb der Ablaufsteuerungsumgebung ablaufen, wobei die Ablaufsteuerungsumgebung auf einem Host-Betriebssystem der Server-Einrichtung installiert ist.

3. Verfahren nach Anspruch 2,
bei dem die Software-Container jeweils gemeinsam mit anderen auf der Server-Einrichtung ablaufenden Software-Containern einen Kernel des Host-Betriebssystems der Server-Einrichtung nutzen.

4. Verfahren nach einem der Ansprüche 2 oder 3,
bei dem Container-Images für die Software-Container aus einem durch eine Vielzahl von Nutzern lesend und/oder schreibend zugreifbaren Speicher- und Bereitstellungssystem abrufbar sind.

5. Verfahren nach einem der Ansprüche 2 bis 4,
bei dem die Ablaufsteuerungsumgebung (102) eine vertrauenswürdige Container-Runtime ist und bei dem die Software-Container (111, 112) durch die vertrauenswürdige Container-Runtime jeweils auf Basis eines Container-Images (303) gestartet werden.

6. Verfahren nach einem der Ansprüche 1 bis 5,
bei dem mittels der Ablaufsteuerungskomponenten Dienste und/oder Funktionen eines industriellen Automatisierungssystems bereitgestellt werden.

7. Verfahren nach Anspruch 6,
bei dem die Dienste und/oder Funktionen jeweils mehrere gleichartige oder identische Server-Komponenten umfassen, die jeweils durch unterschiedliche Server-Einrichtungen bereitgestellt werden.

8. Verfahren nach einem der Ansprüche 1 bis 7,
bei dem die Ablaufsteuerungskomponenten jeweils von der Server-Einrichtung auf eine andere Server-Einrichtung zur dortigen Ausführung migrierbar und/oder auf anderen Server-Einrichtungen zeitgleich ausführbar sind.

9. Verfahren nach Anspruch 8,
bei dem eine mehreren Server-Einrichtungen (100) zugeordnete Orchestrierungskomponente (300) ein Anlegen, ein Löschen und/oder eine Änderung der Ablaufsteuerungskomponenten (111, 112) erfasst und mittels der Ablaufsteuerungskomponenten bereitgestellte Dienste mit ihrem jeweiligen Ausführungsstatus registriert und bei dem das Anlegen, das Löschen und/oder die Änderung der Ablaufsteuerungskomponenten jeweils ein Allokieren oder Freigeben von Ressourcen in der jeweiligen Server-Einrichtung umfasst.

10. Verfahren nach einem der Ansprüche 1 bis 9,
bei dem die Credentials kryptographische Schlüssel und/oder Nutzernamen und Passwörter umfassen und durch die Server-Einrichtung oder durch eine der Server-Einrichtung zugeordnete Orchestrierungskomponente in einem der jeweiligen Ablaufsteuerungskomponente zugeordneten Speicherbereich oder -objekt gespeichert werden.

11. Verfahren nach Anspruch 10,
bei dem die Credentials in einem der jeweiligen Ablaufsteuerungskomponente zugeordneten virtuellen Laufwerk oder Verzeichnis auf der Server-Einrichtung oder Orchestrierungskomponente gespeichert werden.

12. Verfahren nach Anspruch 11,
bei dem das virtuelle Laufwerk oder Verzeichnis durch einen reservierten Arbeitsspeicherbereich der Server-Einrichtung oder Orchestrierungskomponente gebildet wird und bei dem der Arbeitsspeicherbereich von einem physikalischen Arbeitsspeicher und/oder von einer Auslagerungsdatei oder -partition umfasst ist.

13. Verfahren nach einem der Ansprüche 10 bis 12,
bei dem die Credentials mit einem zusätzlichen kryptographischen Schlüssel geschützt werden, der nur der Server-Einrichtung bekannt ist.

14. Verfahren nach einem der Ansprüche 10 bis 13,
bei dem die Credentials zyklisch durch eine Ablaufsteuerungskomponente, die einer Initialisierungsanwendung zugeordnet ist, oder durch die Generatorkomponente erneuert werden.

15. Steuerungssystem, insbesondere zur Durchführung eines Verfahrens nach einem der Ansprüche 1 bis 14, mit
- zumindest einer Ablaufsteuerungskomponente, die in eine mittels einer Server-Einrichtung gebildete Ablaufsteuerungsumgebung ladbar und dort ausführbar ist,
- einer Generatorkomponente, die dafür ausgestaltet und eingerichtet ist, für die Ablaufsteuerungskomponente bei einem Start ihrer Ausführung aus Server-spezifischen Charakteristika und aus Ablaufsteuerungskomponenten-spezifischen Charakteristika Credentials zum Zugriff auf kryptographisch geschützte Systemressourcen zu erzeugen,
- wobei die Bedingungen für eine Erzeugung der Credentials jeweils in einer Spezifikation, die eine Beschreibung der jeweiligen Ablaufsteuerungskomponente und ihrer Abhängigkeiten umfasst, definiert sind,
- wobei die Generatorkomponente dafür ausgestaltet und eingerichtet ist, die Credentials nur bei Erfüllung der Bedingungen zu erzeugen und/oder bereitzustellen,
- wobei die Ablaufsteuerungskomponente dafür ausgestaltet und eingerichtet ist, die Credentials nach erfolgreicher Erzeugung und/oder Bereitstellung zur Authentisierung der jeweiligen Ablaufsteuerungskomponente gegenüber durch die Ablaufsteuerungskomponente genutzten Diensten und/oder zur Verschlüsselung von durch die jeweilige Ablaufsteuerungskomponente verwalteten Daten zu verwenden.
